# EUROPEAN PATENT APPLICATION

(11) **EP 1 840 086 A2**
(43) Date of publication of application: **03.10.2007**
(21) Application number: 07006502.4
(22) Date of filing: 29.03.2007
(51) Int. Cl.: C01G 1/02, C01G 25/00

(54) **Method of producing nanoporous metal oxide material**

(30) Priority: 31.03.2006 JP 2006101038
(71) Applicant: KABUSHIKI KAISHA TOYOTA CHUO KENKYUSHO, Aichi-gun, Aichi-ken, 480-1192 (JP)
(72) Inventor: Shimazu, Takashi, Aichi-gun Aichi 480-1192 (JP); Sobukawa, Hideo, Aichi-gun Aichi 480-1192 (JP); Tsuji, Ryusuke, Aichi-gun Aichi 480-1192 (JP); Yonekura, Hirotaka, Kabushiki Kaisha Toyota, Nagakute-cho, Aichi-gun Aichi 180-1192 (JP); Hasegawa, Yoriko, Aichi-gun Aichi 480-1192 (JP); Esaki, Yasuo, Aichi-gun Aichi 480-1192 (JP); Suzuki, Noritomo, Aichi-gun Aichi 480-1192 (JP)
(74) Representative: Kramer - Barske - Schmidtchen

(57) **Abstract**

Provided is a method of producing a nanoporous metal oxide material including two or more first metal oxides selected from the group consisting of alumina, zirconia, titania, iron oxide, rare-earth oxides, alkali metal oxides and alkaline earth metal oxides. The method includes a process of preparing a fluid raw material composition containing raw materials of the two or more first metal oxides, which contains colloidal particles of at least one of the first metal oxides. What follows are processes of mixing the fluid raw material composition at a shear rate of 1000 sec⁻¹ or more such that the change in the particle diameter in the fluid raw material composition (mean particle diameter of the colloidal particles after mixing/ mean particle diameter of the colloidal particles before mixing) is 1.3 or more, and then heat-treating the fluid raw material composition without practical coprecipitation. Thus, obtained is the nanoporous metal oxide material which has nanopores each with a diameter of 10 nm or less, and in which the metal oxides are homogeneously dispersed in a wall constituting the nanopores.

## Description

### BACKGROUND OF THE INVENTION

### Field of the Invention

The present invention relates to a method of producing a nanoporous metal oxide material including two or more metal oxides.

### Related Background Art

Various catalysts have so far been developed as catalysts for purification of an exhaust gas to purify hazardous components discharged from an internal combustion engine such as an automobile. As such catalysts for purification of an exhaust gas, those including various kinds of substrates including a honeycomb filter on which a metal oxide such as alumina, zirconia and ceria, as well as a noble metal such as platinum, rhodium, and palladium are supported have generally been used.

In general, the powder prepared by a wet grinding method has so far been used as such a metal oxide. For example, Japanese Unexamined Patent Application Publication No. Hei 10-182155 (JP 10-182155 B) (Document 1) and Japanese Unexamined Patent Application Publication No. 2002-79097 (Document 2) disclose the methods of producing compound metal oxide powder by preparing oxide precursors from the salt solutions of aluminum, cerium, and zirconium using coprecipitation method, and then by calcining the yielded oxide precursor in the air. In addition, Japanese Unexamined Patent Application Publication No. Hei 7-300315 (Document 3) discloses the method of producing compound metal oxide powder by adding boehmite alumina powder to the mixed solution of cerium and zirconium salt solutions, stirring the mixture, and then drying and calcining the resultant.

However, when the conventional metal oxide powders as described in Documents 1 to 3 are used, the adhesion to substrates (particularly to metal substrates) and heat resistance are still not always sufficient. Moreover, there is the limitation of the formation of thin film coating on the substrate. For this reason, there has been a problem that it is difficult to support the above described conventional metal oxide powders on a substrate such as a metal honeycomb filter or a high density honeycomb having tubular passages narrower (for example, micro-channel having a density of 1200 cell/inch² or more) than those of a general honeycomb filter.

To solve the above problem, for example, International Publication No. WO2005/121025 (Document 4) discloses the method of producing a nanoporous metal oxide material which includes two or more first metal oxide selected from the group consisting of alumina, zirconia, titania, iron oxide, rare-earth oxides, alkali metal oxides and alkaline-earth metal oxides, the method including the processes of: preparing a fluid raw material composition containing raw materials of the above described two or more first metal oxides; and mixing the fluid raw material composition at a shear rate of 1000 sec⁻¹ or more, and then heat-treating the fluid raw material composition without practical coprecipitation to obtain the nanoporous metal oxide material which has nanopores each with a diameter of 10 nm or less, and in which the metal oxides are homogeneously dispersed in a wall constituting the nanopores.

### SUMMARY OF THE INVENTION

However, it has been found that the conventional method of producing the nanoporous metal oxide material described in the above Document 4 is not necessarily satisfactory from the viewpoint of its production accuracy, while the method provides the nanoporous metal oxide material which has strong adhesion to various substrates such as a honeycomb filter and the like and excellent heat resistance under some conditions, and which can also be coated in the form of a thinner film on the substrates. This means that the nanoporous metal oxide material having the above described excellent performances cannot be produced with high accuracy simply by mixing the fluid raw material composition containing the raw materials of two or more metal oxides at a high shear rate and by heat-treating without practical coprecipitation.

The present invention is intended to solve the problems which the above conventional technique has. It is an object of the present invention to provide a method of producing a nanoporous metal oxide material, which makes it possible to produce the nanoporous metal oxide material, with high accuracy, which has strong adhesion to various substrates such as honeycomb filter and the like, and excellent heat resistance, and which can also be coated in the form of a thinner film on the substrates.

The present inventors devoted themselves to repeat eager studies for the achievement of the above object. As a result, it has been found that the nanoporous metal oxide material which has strong adhesion to various substrates such as a honeycomb filter and the like, and excellent heat resistance, and which can also be coated in the form of a thinner film on the substrates, can be produced with high accuracy as the following processes. Specifically, the present invention has been accomplished by controlling a predetermined parameter related to the above fluid raw material composition such that the parameter is within a particular range when mixing the above fluid raw material composition at a high shear rate in the nanoporous metal oxide material production method in which the fluid raw material composition including the raw materials of two or more metal oxides is mixed at a high shear rate, and heat-treated without practical coprecipitation.

The first aspect of the method of producing a nanoporous metal oxide material according to the present invention is a method which provides the nanoporous metal oxide material including two or more first metal oxides selected from the group consisting of alumina, zirconia, titania, iron oxide, rare-earth oxides, alkali metal oxides and alkaline earth metal oxides. The method includes the processes of: preparing a fluid raw material composition containing raw materials of the two or more first metal oxides, which contains the colloidal particles of at least one of the first metal oxides; and mixing the fluid raw material composition at a shear rate of 1000 sec⁻¹ or more such that the change in the particle diameter in the fluid raw material composition (mean particle diameter of the colloidal particles after mixing/ mean particle diameter of the colloidal particles before mixing) is 1.3 or more, and then heat-treating the fluid raw material composition without practical coprecipitation to obtain the nanoporous metal oxide material which has nanopores each with a diameter of 10 nm or less, and in which the metal oxides are homogeneously dispersed in a wall constituting the nanopores.

In the first aspect of the method of producing a nanoporous metal oxide material according to the present invention, the fluid raw material composition is preferably mixed at the shear rate of 1000 sec⁻¹ or more such that the change in the zeta potential of the fluid raw material composition (the zeta potential of the fluid raw material composition after mixing/ the zeta potential of the fluid raw material composition before mixing) is 0.95 or less.

The second aspect of the method of producing a nanoporous metal oxide material according to the present invention is a method which provides the nanoporous metal oxide material includes two or more first metal oxides selected from the group consisting of alumina, zirconia, titania, iron oxide, rare-earth oxides, alkali metal oxides and alkaline earth metal oxides. The method includes the processes of: preparing a fluid raw material composition containing raw materials of the two or more first metal oxides, which contains the colloidal particles of at least one of the first metal oxides; and mixing the fluid raw material composition at a shear rate of 1000 sec⁻¹ or more such that the change in the zeta potential of the fluid raw material composition (zeta potential of the fluid raw material composition after mixing/ zeta potential of the fluid raw material composition before mixing) is 0.95 or less, and then heat-treating the fluid raw material composition without practical coprecipitation to obtain the nanoporous metal oxide material which has nanopores each with a diameter of 10 nm or less, and in which the metal oxides are homogeneously dispersed in a wall constituting the nanopores.

In the method of producing a nanoporous metal oxide material according to the present invention, the fluid raw material composition is preferably mixed at a shear rate of 10000 sec⁻¹ or more.

The reason is not necessarily apparent why the nanoporous metal oxide material which has strong adhesion to various substrates such as a honeycomb filter and the like, and excellent heat resistance, and which can also be coated in the form of a thinner film on the substrates can be produced with high accuracy using the method of producing a nanoporous metal oxide material according to the present invention. The present inventors estimate the reason as follows.

Specifically, when the fluid raw material composition containing the colloidal particles of the metal oxides is mixed at a high shear rate, the colloidal particles in the fluid raw material composition are associated with the metal salts, and extremely uniformly dispersed. Note that the association refers to a state in which two or more kinds of colloidal particles and metal salts get together by a relatively weak bonding force such as charge transfer bond to form an aggregate with relatively high regularity. The present inventors estimate that, by heat-treating the colloidal particles of the metal oxides which are thus associated with the metal salt and extremely uniformly dispersed in the fluid raw material composition without practical coprecipitation, it becomes possible to form the coating of the metal oxides which has strong adhesion to various substrates such as a honeycomb filter and the like, and excellent heat resistance, and that it also becomes possible to form a thinner film coating on the substrates. In the present invention, the achievement ratio of the association of the colloidal particles in the fluid raw material composition is detected using a predetermined parameter related to the fluid raw material composition. The predetermined parameter is controlled so as to be within a particular range. The present inventors suppose that the present invention, therefore, makes it possible to produce the nanoporous metal oxide material having the above described excellent performances with higher accuracy.

The present invention makes it possible to provide the method which.allows the production, with higher accuracy, of the nanoporous metal oxide material which has high adhesion to various substrates such as a honeycomb filter and the like, and the excellent heat resistance, and which can also be coated in the form of a thinner film on the substrates.

### BRIEF DESCRIPTION OF THE DRAWINGS

Fig. 1 is a graph showing the relationship between the change in the particle diameter of the fluid raw material composition and the homogeneous dispersion of the metal oxides in the mixing process.
Fig. 2 is a graph showing the relationship between the change in the zeta potential of the fluid raw material composition and the homogeneous dispersion of the metal oxides in the mixing process.

### DETAILED DESCRIPTION OF THE PREFERRED EMBODIMENTS

The present invention will be described in detail in conjunction with the preferred embodiments hereinafter.

A method of producing a nanoporous metal oxide material according to the present invention is a method which provides the nanoporous metal oxide material including two or more first metal oxides selected from the group consisting of alumina, zirconia, titania, iron oxide, rare-earth oxides, alkali metal oxides and alkaline earth metal oxides. The method includes the processes of: preparing a fluid raw material composition containing raw materials of the two or more first metal oxides, which contains the colloidal particles of at least one of the first metal oxides; and mixing the fluid raw material composition at a shear rate of 1000 sec⁻¹ or more such that a predetermined parameter related to the fluid raw material composition is within a particular range, and then heat-treating the fluid raw material composition without practical coprecipitation to obtain the nanoporous metal oxide material which has nanopores each with a diameter of 10 nm or less, and in which the metal oxides are homogeneously dispersed in a wall constituting the nanopores.

### (Process of preparing fluid raw material composition)

First, described is the process of preparing the fluid raw material composition containing the raw materials of two or more first metal oxides, which contains the colloidal particles of at least one of the first metal oxides.

The first metal oxide used in the present invention includes two or more metal oxides selected from the group consisting of alumina, zirconia, titania, iron oxide, rare-earth oxides, alkali metal oxides and alkaline earth metal oxides. The rare-earth oxides include the oxides of cerium, lanthanum, neodymium, yttrium, praseodymium and the like. The alkali metal oxides include the oxides of lithium, sodium, potassium, cesium and the like. The alkaline earth metal oxides include the oxides of barium, strontium, calcium, magnesium and the like.

As such metal oxides used in the present invention, two or more compound metal oxides selected from the group consisting of alumina, zirconia, titania, iron oxide, ceria, lanthana, neodymia, yttria, barium oxide, lithium oxide and potassium oxide are preferable from the viewpoint that the nanoporous metal oxide material to be obtained will be useful as the catalyst or the like for purification of an exhaust gas. A particularly preferable one is compound metal oxides containing at least one selected from the group consisting of alumina, zirconia, ceria and titania.

The combination of two or more metal oxides used in the present invention is not particularly limited. However, from the viewpoint that the nanoporous metal oxide material to be obtained will be useful as the catalyst or the like for purification of an exhaust gas, a preferable combination includes alumina/ceria/zirconia, alumina/zirconia/titania, alumina/zirconia/lanthana, zirconia/lanthana, zirconia/neodymia, zirconia/yttria, zirconia/titania, ceria/zirconia, alumina/zirconia/yttria, ceria/zirconia/yttria, alumina/ceria, alumina/zirconia, alumina/titania, alumina/lanthana, alumina/ceria/zirconia/yttria, alumina/ceria/zirconia/neodymia, alumina/ceria/zirconia/lanthana, alumina/ceria/zirconia/lanthana/praseodymium oxide, alumina/ceria/zirconia/lanthana/neodymia, alumina/ceria/zirconia/lanthana/neodymia/yttria, alumina/iron oxide, ceria/iron oxide, alumina/ceria/iron oxide, zirconia/iron oxide, alumina/zirconia/iron oxide and the like. Among these combinations, alumina/ceria/zirconia, alumina/zirconia/titania, alumina/zirconia/lanthana, zirconia/lanthana, zirconia/neodymia, zirconia/yttria, zirconia/titania, ceria/zirconia, alumina/zirconia/yttria, ceria/zirconia/yttria, alumina/ceria, alumina/zirconia and alumina/iron oxide are particularly preferable.

Moreover, in view that the nanoporous metal oxide material to be obtained will be preferable for the catalyst or the like for purification of an exhaust gas, especially the material for the catalyst used in the presence of excessive amount of oxygen, a preferable combination of two or more metal oxides according to the present invention includes alumina/potassium oxide, alumina/barium oxide, barium oxide/potassium oxide, barium oxide/sodium oxide, barium oxide/lithium oxide, barium oxide/potassium oxide/lithium oxide, titania/barium oxide, titania/barium oxide/potassium oxide, titania/barium oxide/sodium oxide, titania/barium oxide/lithium oxide, titania/barium oxide/potassium oxide/sodium oxide, titania/barium oxide/potassium oxide/lithium oxide, titania/barium oxide/potassium oxide/lithium oxide/sodium oxide, titania/barium oxide/potassium oxide/strontium oxide and the like. Among these combinations, particularly preferable combinations include alumina/potassium oxide, alumina/barium oxide, barium oxide/potassium oxide, barium oxide/lithium oxide, barium oxide/potassium oxide/lithium oxide, titania/barium oxide, titania/barium oxide/potassium oxide and titania/barium oxide/lithium oxide.

Note that, the composition ratio of the metal oxides in such various compound metal oxides is not particularly limited, and suitably controlled in accordance with usage thereof or the like.

The fluid raw material composition according to the present invention contains the raw materials of the two or more first metal oxides, which contains the colloidal particles of at least one of the first metal oxides. The colloidal particles of the aforementioned metal oxides used in the present invention have the mean particle diameter of 5 nm to 200 nm, preferably 5 nm to 100 nm. The colloidal particle having the mean particle diameter of less than 5 nm is difficult to be produced in principle because it is difficult to produce the particle having a size smaller than that of the elementary substance of the metal oxide. On the other hand, if the colloidal particles have the mean particle diameter of more than 200 nm, various kinds of problems arise including the reductions in mixing and dispersion properties, adhesion, and reactivity.

The shape of such colloidal particles is not particularly limited, and includes needle-like particle, rod-like particle, feathery particle, spherical particle, indeterminate particle and the like. The solvent for controlling the concentration of the colloid solution is not particularly limited, and includes water, alcohol and the like. However, it is determined taking into consideration of the amount of the supported metal oxide per one procedure.

The concentration (solid content concentration) of the fluid raw material composition is suitably adjusted in accordance with the targeted shape (thickness and particle diameter) of the nanoporous metal oxide material and with the viscosity suitable for the applying and pulverizing methods. The solid content concentration is generally about 5% by mass to 50% by mass, preferably about 10% by mass to 15% by mass.

In a case of obtaining a nanoporous material including two or more metal oxides in the present invention, part of the metal oxides may further be contained in the above colloid solution as the solution of elements constituting the metal oxides. As such a solution, the solution prepared by dissolving, in a solvent such as water, alcohol and the like, the salts (nitrate, acetate, chloride, sulfate, sulfite, inorganic complex salt or the like) of the metals which are the constituting elements of the metal oxide is suitably used. The pH of such a solution is not particularly limited. However, the pH in a range of 3.0 to 6.0 is preferable from the viewpoint that the metallic ions can stably be present in the solution.

Furthermore, in the present invention, second metal oxide powder having the mean particle diameter of 0.01 µm to 50 µm (preferably 0.01 µm to 10 µm) may further be contained in the fluid raw material composition. Note that, as such second metal oxide, the same metal oxide as the above described first metal oxides is suitably used. Moreover, as the second metal oxide powder, the powder obtained by drying the solution containing the metal salt which is oxidized to form the second metal oxide and then pulverizing the salt is suitably used. Furthermore, the mean particle diameter thereof is preferably not more than the thickness of the coating to be obtained.

When such second metal oxide powder is used, the noble metal can previously be supported on the surface thereof. A specific method of supporting the noble metal is not particularly limited, but, for example, a suitably used method is as follows. In the method, the powder is immersed in a solution prepared by dissolving the noble metal salt (nitrate, chloride, acetate and the like) or the noble metal complex in a solvent such as water, alcohol and the like, the solvent is removed, and then the powder is calcined, and pulverized. Note that, in the process of supporting the noble metal, the solvent is removed preferably under drying condition at a temperature of 30°C to 50°C within about 10 minutes. The calcining conditions are preferably at 250°C to 300°C for about 30 minutes to 60 minutes in an oxidation atmosphere (for example in the air). Such a noble metal supporting process can be repeated until the desired amount of the noble metal is supported.

### (Process of obtaining the nanoporous metal oxide material)

Next, described is the process of mixing the fluid raw material composition at a shear rate of 1000 sec⁻¹ or more such that the predetermined parameter related to the fluid raw material composition is within the particular range (mixing process), and then heat-treating the fluid raw material composition without practical coprecipitation (heat-treatment process) to obtain the nanoporous metal oxide material which has the nanopores each with a diameter of 10 nm or less, and in which the metal oxides are homogeneously dispersed in the wall constituting the nanopores.

In the mixing process according to the present invention, the fluid raw material composition according to the present invention is firstly mixed at a shear rate of 1000 sec⁻¹ or more, preferably 10000 sec⁻¹ or more, and more preferably 20000 sec⁻¹ or more. Such a shear rate of less than 1000 sec⁻¹ does not allow the obtained nanoporous metal oxide material to meet the above homogeneousness of the components, resulting in insufficient improvements in adhesion and heat resistance. On the other hand, the upper limit of the shear rate is not particularly limited, but the shear rate of 200000 sec⁻¹ or less is preferable.

The equipment used here is not particularly limited as long as the equipment is usable for mixing at such a high shear rate, but a homogenizer is suitably used. A mixing time is also not particularly limited when mixing is performed at a high shear rate, but is generally about 1 minute to 20 minutes (preferably 1 minute to 5 minutes).

In the first aspect of the method of producing a nanoporous metal oxide material according to the present invention, it is necessary to mix the fluid raw material composition at a high shear rate such that the change in the particle diameter in the fluid raw material composition (mean particle diameter of the colloidal particles after mixing/ mean particle diameter of the colloidal particles before mixing) is 1.3 or more in the fluid raw material composition. The change in the particle diameter of less than 1.3 does not allow the production, with high accuracy, of the nanoporous metal oxide material which has high adhesion to various substrates such as a honeycomb filter and the like, and excellent heat resistance, and can be coated on the substrates in the form of a thinner film. From the viewpoint that the above described nanoporous metal oxide material having such excellent performances is produced with higher accuracy, the change in the particle diameter of 1.4 or more is preferable.

Note that such a change in the particle diameter can be calculated by measuring the mean particle diameter of the colloidal particles in the fluid raw material composition before and after mixing using a particle measuring device, and by computing the measurements.

In the first aspect of the method of producing a nanoporous metal oxide material according to the present invention, the fluid raw material composition is preferably mixed at a high shear rate while the change in the particle diameter is measured such that the change in the particle diameter is not less than the above lower limit. Alternatively, the conditions (such as shear rate and mixing time) under which the change in the particle diameter is not less than the above lower limit, may be previously determined with accuracy to mix the fluid raw material composition under the determined conditions.

Furthermore, in the first aspect of the method of producing a nanoporous metal oxide material according to the present invention, the fluid raw material composition is preferably mixed at a high shear rate such that the change in the zeta potential of the fluid raw material composition (zeta potential of the fluid raw material composition after mixing/ zeta potential of the fluid raw material composition before mixing) is 0.95 or less, more preferably 0.88 or less, from the viewpoint that the nanoporous metal oxide material having the above described excellent performance is produced with higher accuracy.

Note that, such a change in the zeta potential can be calculated by measuring the zeta potentials of the fluid raw material composition before and after mixing using a zeta potential measuring device, and by computing the measurements.

In the second aspect of the method of producing a nanoporous metal oxide material according to the present invention, it is necessary to mix the fluid raw material composition at a high shear rate such that the change in the zeta potential of the fluid raw material composition (zeta potential of the fluid raw material composition after mixing/ zeta potential of the fluid raw material composition before mixing) is 0.95 or less. The change in the zeta potential of more than 0.95 does not allow the production, with high accuracy, of the nanoporous metal oxide material which has high adhesion to various substrates such as a honeycomb filter and the like, and excellent heat resistance, and which can be coated on the substrate in the form of a thinner film. Moreover, from the viewpoint that the above described nanoporous metal oxide material having such excellent performances is produced with higher accuracy, the change in the zeta potential of 0.88 or less is preferable. Such a change in the zeta potential can be calculated using the above described method.

Note that, in the present invention, deaeration treatment in which the fluid raw material composition is stirred gently at a low speed (for example, 20 rpm to 100 rpm) for about 1 minute to 2 minutes after being mixed at a high shear rate may be carried out in order to sufficiently remove air bubbles which are mixed into the mixed fluid raw material composition.

In the heat-treatment process according to the present invention, the nanoporous metal oxide material which has the nanopores each with a diameter of 10 nm or less, and in which the metal oxides are homogeneously dispersed in the wall constituting the nanopores, is obtained by mixing the fluid raw material composition at the above high shear rate (mixing process), and then heat-treating the fluid raw material composition without practical coprecipitation (heat-treatment process).

As described above, it is necessary to perform heat-treatment without practical coprecipitation after the above described mixing process in the heat-treatment process according to the present invention. Here, "without practical coprecipitation" refers to the state where the metallic elements in the fluid raw material composition solidifies by the heat-treatment and forms the metal oxides without practically going through the state of hydroxides. To be more specific, it means that the ratio of the hydroxide in the metallic components in the fluid raw material composition before such a heat-treatment is 50 at % or less (preferably 30 at % or less).

In the heat treatment process according to the present invention, the targeted nanoporous metal oxide material is obtained by mixing the fluid raw material composition at the above high shear rate, and then heat-treating the fluid raw material composition without practical coprecipitation. When a metal salt solution is used as the fluid raw material composition, the targeted nanoporous metal oxide material can be obtained by oxidizing the metallic components in the fluid raw material composition by such heat-treatment to form the metal oxides.

In the heat-treatment process according to the present invention, the fluid raw material composition is preferably heat-treated at a high rate after being mixed at the above high shear rate. A specific method of such heat-treatment is not particularly limited. However, the method is suitably employed in which the fluid raw material composition is dried at a high rate after the above mixing, and furthermore calcinated as necessary.

Moreover, in the heat-treatment process according to the present invention, the above heat-treatment is desired to be carried out as shortly as possible after the fluid raw material composition is mixed at the above high shear rate, preferably in about 60 minutes, more preferably in about 30 minutes. If the heat-treatment time exceeds the above upper limit, the effect of the stirring at a high shear rate is reduced, resulting in the occurrence of aggregation of the metal oxides before and during the heat-treatment process. Consequently, it tends to be difficult to obtain the nanoporous metal oxide material having sufficiently improved adhesion and heat resistance.

Such heat-treatment may include the calcination of the fluid raw material composition under the calcining conditions to be described below and drying at the same time. However, it is preferable to dry the fluid raw material composition at a high rate while the solvent is removed before the calcination. In this case, as the drying conditions, the drying temperature is more preferably 60°C to 180°C (particularly preferably 100°C to 150°C), and the drying time is more preferably within 10 minutes (particularly preferably 5 minutes) . A drying temperature of less than the above-described lower limit tends to make it difficult to sufficiently achieve high rate drying. On the other hand, when a drying temperature exceeds the above-described upper limit, the drying rate is too high at an early drying stage. This causes cracks, fractures and the like because the evaporation rate of moisture becomes faster than the film formation rate. As a result, the adhesion tends to be deteriorated to a large extent. If the drying time exceeds the above-described upper limit, the effect of the stirring at a high shear rate is reduced, resulting in the occurrence of the aggregation of the metal oxides in the drying process. Consequently, it tends to be difficult to obtain the nanoporous metal oxide material having sufficiently improved adhesion and heat-resistance. In such high rate drying process, the fluid raw material composition is preferably dried until the moisture content thereof is 200% by mass or less (particularly preferably 100% by mass or less).

As the calcining conditions, a calcining temperature of 250°C to 600°C (particularly preferably 350°C to 500°C) and a calcining time of 20 minutes to 70 minutes (particularly preferably 30 minutes to 60 minutes) are more preferably used in an oxidation atmosphere (for example in the air). When the calcining temperature is less than the above-described lower limit, the calcination is not sufficiently achieved. As a result, it tends to be difficult to obtain the nanoporous metal oxide material having sufficiently improved adhesion and heat resistance. On the other hand, when the calcining temperature exceeds the above-described upper limit, the reduction in performance such as sintering and the like tends to occur due to a high temperature and oxidation atmosphere. When the calcining time is less than the above-described lower limit, the calcination is not sufficiently achieved. As a result, it tends to be difficult to obtain the nanoporous metal oxide material having sufficiently improved adhesion and heat resistance. On the other hand, if this time exceeds the above-described upper limit, the effect of the stirring at a high shear rate is reduced, resulting in the occurrence of aggregation of the metal oxides in the calcining process. Consequently, it tends to be difficult to obtain the nanoporous metal oxide material having sufficiently improved adhesion and heat-resistance.

Note that, by the method of producing a nanoporous metal oxide material of the present invention as described above, the nanoporous metal oxide material can be suitably obtained in the form of a thin film or in the form of powder.

To obtain the nanoporous metal oxide material in the form of such a thin film, the method is suitably employed in which the fluid raw material composition is mixed at the above high shear rate, applied on the substrate without practical coprecipitation, and then heat-treated.

The substrate used here is not particularly limited, and suitably selected in accordance with the usage or the like of the nanoporous metal oxide material to be obtained. When the obtained nanoporous metal oxide material is used as the catalyst or the like for purification of an exhaust gas, a monolith-support substrate (such as honeycomb filter, high density honeycomb and the like), a foam filter substrate, a pellet-like substrate, a plate-like substrate and the like are suitably employed. Moreover, the material of such substrates is not particularly limited. However, the substrate made of ceramics such as cordierite, silicon carbide and mullite, and a substrate made of a metal such as stainless steel containing chromium, and aluminum are suitably employed when the nanoporous metal oxide material is used as the catalyst or the like for purification of an exhaust gas. Note that, when the substrate made of a metal is used, the substrate is preferably heat-pretreated at 300°C to 1000°C for about 1 hour to 10 hours to form an oxide film on the surface thereof because the adhesion thereof tends to be improved.

In the method of producing a nanoporous metal oxide material according to the present invention, the amount of the fluid raw material composition to be applied on the substrate is not particularly limited, and suitably controlled in accordance with the usage or the like of the obtained nanoporous metal oxide material to be obtained. However, the amount of about 10 g to 300 g of the metal oxide constituting the thin film is preferable per 1 liter of the substrate volume.

A specific method of applying the fluid raw material composition on the substrate is not particularly limited. For example, a method in which the substrate is immersed in the fluid raw material composition, or a method in which the surface of the substrate is coated with the fluid raw material composition by spraying is suitably used.

Alternatively, the process of applying the fluid raw material composition on the substrate may be repeated until the desired supported amount is obtained. In this case, the fluid raw material composition is preferably temporarily calcined after applied on the substrate and dried. As the temporal calcining conditions in this case, a calcining temperature of 250°C to 300°C and a calcining time of 30 minutes to 60 minutes are particularly preferably in an oxidation atmosphere (for example, in the air).

To obtain the nanoporous metal oxide material in the form of powder, the method is suitably employed in which the fluid raw material composition is mixed at the above high shear rate, heat-treated without practical coprecipitation, and then pulverized. The method of pulverizing the fluid raw material composition is not particularly limited, however the method is suitably used in which the coated composition is dried, and calcined as necessary, and then pulverized to produce the powder nanoporous metal oxide material.

Moreover, in the method of producing a nanoporous metal oxide material according to the present invention, the above-described noble metal may be supported on the surface of the nanoporous metal oxide material obtained in the manner described above. A specific method of supporting such a noble metal is not particularly limited, however, for example, the method is suitably used in which the above powder is immersed in a solution prepared by dissolving the noble metal salt (nitrate, chloride, acetate, and the like) or the noble metal complex in a solvent such as water, alcohol and the like, thereafter the solvent is removed, and subsequently the product is calcined, and pulverized. Note that, as the drying conditions when the solvent is removed in the above process of supporting the noble metal, a drying temperature of 30°C to 150°C and a calcining time of 10 minutes or less are preferably employed. As the calcining conditions, a calcining temperature of 250°C to 300°C and a calcining time of about 30 minutes to 60 minutes are preferably used in an oxidation atmosphere (for example, in the air). Alternatively, such a process of supporting the noble metal may be repeated until the desired supported amount is obtained.

### (Nanoporous metal oxide material)

By the method of producing a nanoporous metal oxide material of the present invention as described above, the nanoporous metal oxide material which has the nanopores each with a diameter of 10 nm or less, and in which the metal oxides are homogeneously dispersed in the wall constituting the nanopores can be obtained.

Such nanoporous metal oxide material has very fine pores each with a diameter of 10 nm or less, preferably 5 nm or less, more preferably 2 nm or less, and thereby is able to have improved adhesion to various substrates and heat resistance as compared to the porous metal oxide material which does not have such fine pores. Furthermore, the nanoporous metal oxide material is able to achieve the improvement in the performances as a catalyst carrier or the like due to the improvements in a specific surface area and in the supporting stability of the noble metal and the like.

In such nanoporous metal oxide material, the metal oxides are homogeneously dispersed in the wall constituting nanopores. Specifically, in such a nanoporous metal oxide material, two or more metal oxides constituting the nanoporous material are considered to be homogeneously dispersed practically at an atomic level (high dispersion). This apparently differs from the state where primary particles with a diameter of about 100 nm made of each metal oxide are mixed, or from the state where one metal oxide is coating the surface of primary particles made of other metal oxide as in the conventional porous metal oxide material obtained by a coprecipitation method and the like. Such nanoporous metal oxide material having the extremely high level of component homogeneity obtained by the production method according to the present invention has, surprisingly, dramatically improved adhesion to various substrates and heat resistance as compared to the conventional porous metal oxide material obtained by the coprecipitation method and the like.

The component homogeneity of the nanoporous metal oxide material can be evaluated by, for example, the method described below. Specifically, with respect to all the metallic elements of the metal oxides contained in the nanoporous metal oxide material by 10 at % or more, a K value is determined represented by the equation (1) below, and is derived from the arbitrary line analysis of a range of 0.5 mm or more by using an X-ray microanalyzer with an acceleration voltage of 15 kV and an electronic beam diameter of 1 µm.

K-value (%) = (X-ray intensity detected from porous material) / (X-ray intensity obtained from pure substance) Then, with respect to all the above metallic elements, the mean value (Kₘ) of the K-values at all the measurement points and (|K-Kₘ|/Kₘ) value in each measurement point are determined to calculate the proportion of the measurement points where the {|K-Kₘ|/Kₘ} value is not more than the predetermined value (for example, 0.02). It can be said that the higher the proportion of the measurement points where the {|K-Km|/Kₘ} value is not more than the predetermined value, the better component homogeneity the nanoporous metal oxide material has. Note that, of the measurement points subjected to the actual linear analysis, the parts corresponding to the cracks formed in the porous material are omitted from the measurement points at the time of determining the K value. As such a crack recognition method, a recognition method in which the parts where more than the predetermined amounts of the substrate components are detected as cracks in the measurement results of an X-ray microanalyzer, or a recognition method in which a crack is observed using an optical or electron microscope is preferably employed. The X-ray microanalyzer here used is not particular limited, and may be of a usual wavelength dispersion type.

### [Examples]

Based on examples and comparative examples, the present invention is hereinafter more specifically described, however is not particularly limited to the following examples.

As a homogenizer, T.K. ROBOMIX (stirring parts are of T.K. HomoMixer MARKTI 2.5 type) available from Tokusyu Kika Kogyo Co., Ltd. was used.

As an alumina (Al₂O₃) colloid, a Zr solution, and a Ce solution, the followings were respectively used.
Al₂O₃ colloid - mean particle diameter: 5 nm to 20 nm, needle-like particle, nitrate solution (solid content concentration: 25% by weight)
Zr solution- zirconium oxynitrate solution (solid content concentration: 18% by weight)
Ce solution - Cerium nitrate solution (solid content concentration: 28% by weight)

The solid content concentration here used is represented by the mass ratio (%) of the metal oxide formed by evaporating the solvent in each solution, drying and calcining the product relative to the amount of each solution.

As a substrate used to evaluate component homogeneity, adhesion and heat resistance, the metal plate (Fe-20Cr-5Al, 50 mm × 50 mm × 0.3 mm) made of stainless steel containing chromium and aluminum was used. This metal plate was previously heat treated at 1000°C for 1 hour to form oxide coating film on the surface thereof.

### (Example 1)

A colloid solution including 12% by mass of the solid content concentration was prepared by mixing Al₂O₃ colloid, Zr solution and Ce solution such that the mass ratio of A1₂O₃:ZrO₂:CeO₂ is 40:40:20 in the thin film of the metal oxides to be obtained, and by diluting the mixture product with methanol. A coating composition was obtained by mixing the obtained colloid solution using the homogenizer at a shear rate of 20000 sec⁻¹ for 2 minutes, and then by removing mixed air bubbles by mixing the solution at a low stirring speed (20 rpm) for about 1 minute. The mean particle diameter of the colloidal particles in the colloid solution was measured before and after mixing using particle measurement device (Nanotrack UPA-EX250 available from NIKKISO CO., LTD.), and the change in the particle diameter of the colloidal particles was calculated. As a result, the change in the particle diameter of the colloidal particles was 1.42. The zeta potential of the colloid solution was measured before and after mixing using zeta potential measurement device (ZEECOM2/ZC-2000 available from Microtec-Nition Co., Ltd.), and the change in the zeta potential of the colloid solution was calculated. As a result, the change in the zeta potential of the colloid solution was 0.88.

Next, each of the substrates was immediately immersed in the above obtained coating composition for 1 second to 10 seconds, and then taken out. Subsequently, the excessive coating composition on the substrate was removed by gravity and shaking. Then, the substrate was horizontally placed, and thereafter subjected to moderate drying at normal temperature for 5 minutes to 10 minutes, drying by warm wind (60°C to 100°C) at a wind speed of 2 m/sec to 5 m/sec for 5 minutes to 10 minutes, temporal calcining at 250 °C for about 30 minutes in the air atmosphere, and furthermore cooling by using normal temperature wind at a wind speed of 2 m/sec to 5 m/sec for 5 minutes to 10 minutes. Such treatment was repeated twice, and then the substrate was calcined at 500 °C for about 60 minutes in the air atmosphere to obtain the substrate (coated matter) on which the thin film of the metal oxide is supported.

The coating of the metal oxides on the obtained coated matter was observed using a transmission electron microscope (TEM)- As a result, it was confirmed that the thickness of the coating was about 4 µm, and that a thin film made of very uniform metal oxide was formed.

### (Example 2)

The substrate on which the thin film of the metal oxides was supported was obtained in the same manner as that of the Example 1 except that the shear rate used in mixing by the homogenizer was 10000 sec⁻¹. Note that, the change in the particle diameter of the colloidal particles was 1.35, and the change in the zeta potential of the colloid solution was 0.91.

### (Comparative Example 1)

The substrate on which the thin film of the metal oxides was supported was obtained in the same manner as that of the Example 1 except that the shear rate used in mixing by the homogenizer was 4000 sec⁻¹. Note that, the change in the particle diameter of the colloidal particles was 1.14, and the change in the zeta potential of the colloid solution was 0.96.

### (Comparative Example 2)

The substrate on which the thin film of the metal oxides was supported was obtained in the same manner as that of the Example 1 except that stirring was carried out at a low speed (shear rate: 10 sec⁻¹ or less) by a propeller instead of mixing by the homogenizer. Note that, the change in the particle diameter of the colloidal particles was 1.00, and the change in the zeta potential of the colloid solution was 1.00.

### <Evaluation of component homogeneity>

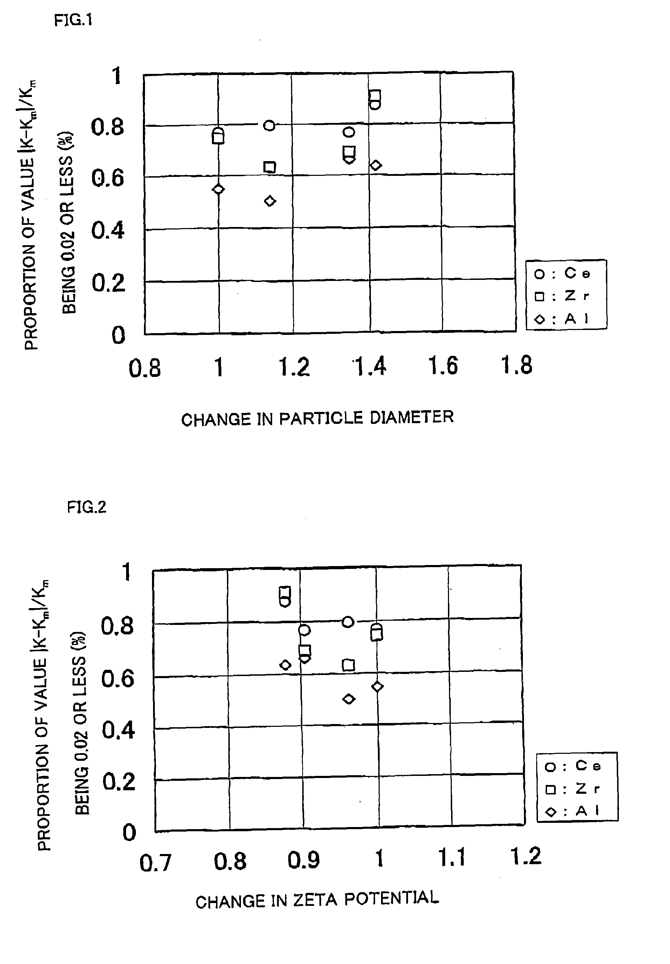

With respect to each of the metal oxide thin films (coated matter) formed on the surface of the metal plate using the methods described in Examples 1 and 2 and Comparative Examples 1 and 2, component homogeneity was evaluated in the manner described below. That is, two measurement lines (measurement lines 1 and 2) of 0.5 mm long were arbitrarily set on the surface of the thin film of the metal oxides obtained in Example 1. With respect to Al, Zr and Ce contained in the thin film and Fe contained in the substrate, a linear analysis was carried out in the measurement points on the measurement lines using an X-ray microanalyzer (JXA-8200 available from JEOL Ltd.) with an acceleration voltage of 15 kV and an electron beam diameter of 1 µm to determine a K-value in each measurement point, the mean value (Kₘ) of K-values in all measurement points, and {|K-Kₘ|/Kₘ} in each measurement point. Note that, a part corresponding to a crack was judged by whether Fe contained in the substrate was detected or not. Table 1 shows the obtained results of the change in the particle diameter of the colloidal particles in Examples 1 and 2 and Comparative Examples 1 and 2, the mean value (Kₘ) of the K-values, and the proportion of the measurement points where a value of {|K-Kₘ|/Kₘ} is not more than 0.02. Fig. 1 is a graph showing the relationship between the change in the particle diameter of the colloidal particles in Examples 1 and 2 and Comparative Examples 1 and 2 and the proportion of the measurement points where a value of {|K-Kₘ|/Kₘ} is not more than 0.02 (homogeneous dispersion of the metal oxides).

**[Table 1]**

| | Change in particle diameter | Proportion of measurement points where a value of \|K-Kₘ\|/Kₘ is 0.02 or less | | | Mean value (Kₘ) of K-values (%) | | |
|---|---|---|---|---|---|---|---|
| | | Ce | Al | Zr | Ce | Al | Zr |
| Example 1 | 1.42 | 0.877 | 0.637 | 0.911 | 25.11 | 16.00 | 16.68 |
| Example 2 | 1.35 | 0.768 | 0.662 | 0.690 | 21.35 | 8.07 | 16.20 |
| Comparative example 1 | 1.14 | 0.796 | 0.502 | 0.632 | 21.17 | 8.12 | 16.09 |
| Comparative example 2 | 1.00 | 0.770 | 0.548 | 0.746 | 21.03 | 8.02 | 16.15 |

As apparent from the results shown in Table 1 and Fig. 1, when the colloid solution was mixed at a high shear rate such that the change in the particle diameter of the colloidal particles was 1.3 or more (as in Examples 1 and 2), the value of {|K-Kₘ|/Kₘ} was 0.02 or less in 60% or more of the measurement points of all the measurement points with respect to all the metallic elements contained in the thin film. From this, it was confirmed that the metal oxides were extremely homogeneously dispersed in the thin film.

Furthermore, Table 2 shows the obtained results of the change in the zeta potential of the colloid solution in Examples 1 and 2 and Comparative Examples 1 and 2, the mean value (Kₘ) of the K-values, and the proportion of the measurement points where a value of {|K-Kₘ|/Kₘ} is not more than 0.02. Fig. 2 is a graph showing the relationship between the change in the zeta potential of the colloid solution in Examples 1 and 2 and Comparative Examples 1 and 2 and the proportion of the measurement points where a value of {|K-Kₘ|/Kₘ} is not more than 0.02 (homogeneous dispersion of the metal oxides).

**[Table 2]**

| | Change in the zeta potential | Proportion of measurement points where a value of \|K-Kₘ\|/Kₘ is 0.02 or less | | | Mean value (Kₘ) of K-values (%) | | |
|---|---|---|---|---|---|---|---|
| | | Ce | Al | Zr | Ce | Al | Zr |
| Example 1 | 0.88 | 0.877 | 0.637 | 0.911 | 25.11 | 16.00 | 16.68 |
| Example 2 | 0.91 | 0.768 | 0.662 | 0.690 | 21.35 | 8.07 | 16.20 |
| Comparative example 1 | 0.96 | 0.796 | 0.502 | 0.632 | 21.17 | 8.12 | 16.09 |
| Comparative example 2 | 1.00 | 0.770 | 0.548 | 0.746 | 21.03 | 8.02 | 16.15 |

As apparent from the results shown in Table 2 and Fig. 2, when the colloid solution was mixed at a high shear rate such that the change in the zeta potential of the colloid solution was not more than 0.95 (as in Examples 1 and 2), the value of {|K-Kₘ|Kₘ} was 0. 02 or less in 60% or more of the measurement points of all the measurement points with respect to all the metallic elements contained in the thin film. From this, it was confirmed that the metal oxides were extremely homogeneously dispersed in the thin film.

### <Evaluation of nanopores>

It was confirmed that the metal oxide thin film obtained by the method described in Example 1 had nanopores, using a nitrogen adsorption method, and small-angle X-ray scattering method described below.

That is, the nitrogen adsorption method is a method in which the amount of gas adsorbed on the surface of a solid matter or the amount of gas desorbed from the surface of a solid matter at a given equilibrium vapor pressure is measured using a static volumetric method. An isotherm data is obtained by introducing, at the critical temperature of the adsorbate, a known amount of adsorption gas into a sample cell containing a solid sample which is held at a constant temperature, or removing a known amount of the adsorption gas from the sample cell. The amount of gas which is adsorbed or desorbed at an equilibrium pressure is equivalent to the difference between the amount of gas which is introduced or removed and the amount of gas required to fill void portions around the sample. In this measurement, fully automatic gas adsorption amount measurement equipment (Autosorb 1PM/LP) available from QUANTACHROME GmbH & Co. KG. was used. Nitrogen adsorption measurement was performed using a sample of 0.05 g to 0.15 g at a measurement temperature of -196°C at a range of relative pressure to the atmospheric pressure P/P₀ between 0. 00001 and 1, and the nitrogen desorption measurement was subsequently performed with the P/P₀ in a range of 0.01 to 1. An adsorption isotherm can be obtained by plotting the adsorbed amount of nitrogen gas. The distribution of the diameter of pores was obtained by an analysis method called BJH method. Note that, the BJH method is the most effective model for the calculation of the distribution of mesopores, and based on the assumption that all pores are in a cylindrical form.

In the small-angle X-ray scattering method, an X-ray undulator beam line which had excellent parallelism and energy density in a radiated light facility was used. X-ray energy was set at 10 keV (wavelength: 0 . 124 nm), and an X-ray beam was firstly narrowed down to about 0.04 millimeter-angle using a four-quadrant slit so as to establish the starting point of the beam of the small-angle scattering method. A pinhole having a diameter of 0.5 mm was placed about 65 cm downstream from the starting point to block the excessive scattering light, and the sample was set attaching to the downstream immediately of the pinhole. The absorption of X-ray was calculated such that the intensity of the X-ray after transmitting the sample was 1/e (e is the base of natural logarithm) to determine the appropriate thickness of the sample. Accordingly, the compressed powder body of the sample was prepared. An imaging plate was set exactly 50 cm downstream from the sample (115 cm downstream from the starting point) to record the scattered X-ray. An attenuator with a cover glass was set at the position of the transmitting X-ray so that the imaging plate was prevented frombeing damaged, and that the position of the transmitting X-ray was recorded on the imaging plate at an appropriate intensity. In performing the analysis, the mean value of the intensity of the X-ray recorded on the concentric circle with the position of transmitting X-ray on the imaging plate as a center was obtained. The radius of the concentric circle was converted to an angle, and the graph showing the relationship between the scattering angle and the intensity was thereby drawn. Based on the assumption that the sample includes spherical scatterers therein, by changing the distribution of the radius of the scatterers suitably, an appropriate distribution which is capable of explaining the graph showing the relationship between the scattering angle and the intensity, was obtained.

From these results, it was confirmed that very fine nanopores each having a diameter of 2 nm or less were formed in the nanoporous metal oxide material obtained by the method according to the present invention.

### <Adhesion test>

Adhesion was evaluated in the following manner with respect to the metal oxide thin films (coatings) formed on the metal plates by the methods described in Examples 1 and 2 and Comparative Examples 1 and 2. That is, the remaining proportion of the thin film (weight standard) was measured while each substrate whose surface was coated with the metal oxide thin film, was ultrasonically vibrated four times for 30 minutes in an ultrasonic cleaner. Table 3 shows the change in the particle diameter of the colloidal particles, the change in the zeta potential of the colloid solution, and the obtained results in Examples 1 and 2 and Comparative Examples 1 and 2.

**[Table 3]**

| | Change in particle diameter | Change in zeta potential | Remaining proportion of thin film (%) |
|---|---|---|---|
| Example 1 | 1.42 | 0.88 | 93 |
| Example 2 | 1.35 | 0.91 | 85 |
| Comparative example 1 | 1.14 | 0.96 | 61 |
| Comparative example 2 | 1.00 | 1.00 | 15 |

As apparent from the results shown in Table 3, it was confirmed that, when the colloid solution was mixed at a high shear rate such that the change in the particle diameter of the colloidal particles was 1.3 or more, and such that the change in the zeta potential of the colloid solution was 0.95 or less (in Examples 1 and 2), the nanoporous metal oxide material having high adhesion to various substrates such as a honeycomb filter and the like can be produced with higher accuracy.

As described above, the present invention makes it possible to provide a method of producing a nanoporous metal oxide material which allows the production, with high accuracy, of the nanoporous metal oxide material which has high adhesion to various substrates such as a honeycomb filter and the like, and excellent heat resistance, and which can also be coated in the form of a thinner film on the substrate.

The method of producing a nanoporous metal oxide material according to the present invention is therefore useful as a technology related to a method of producing a nanoporous metal oxide material including two or more metal oxides.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method of producing a nanoporous metal oxide material comprising two or more first metal oxides selected from the group consisting of alumina, zirconia, titania, iron oxide, rare-earth oxides, alkali metal oxides and alkaline earth metal oxides, the method comprising the processes of:
preparing a fluid raw material composition containing raw materials of the two or more first metal oxides, which includes colloidal particles of at least one of the first metal oxides; and
mixing the fluid raw material composition at a shear rate of 1000 sec⁻¹ or more such that the change in the particle diameter in the fluid raw material composition (mean particle diameter of the colloidal particles after mixing/ mean particle diameter of the colloidal particles before mixing) is 1.3 or more, and then heat-treating the fluid raw material composition without practical coprecipitation to obtain the nanoporous metal oxide material which has nanopores each with a diameter of 10 nm or less, and in which the metal oxides are homogeneously dispersed in a wall constituting the nanopores.

2. The method of producing a nanoporous metal oxide material according to claim 1, wherein the fluid raw material composition is mixed at a shear rate of 1000 sec⁻¹ or more such that the change in the zeta potential of the fluid raw material composition (zeta potential of the fluid raw material composition after mixing/ zeta potential of the fluid raw material composition before mixing) is 0.95 or less.

3. A method of producing a nanoporous metal oxide material comprising two or more first metal oxides selected from the group consisting of alumina, zirconia, titania, iron oxide, rare-earth oxides, alkali metal oxides and alkaline earth metal oxides, the method comprising the processes of:
preparing a fluid raw material composition containing raw materials of the two or more first metal oxides, which includes colloidal particles of at least one of the first metal oxides; and
mixing the fluid raw material composition at a shear rate of 1000 sec⁻¹ or more such that the change in the zeta potential of the fluid raw material composition (zeta potential of the fluid raw material composition after mixing/ zeta potential of the fluid raw material composition before mixing) is 0.95 or less, and then heat-treating the fluid raw material composition without practical coprecipitation to obtain the nanoporous metal oxide material which has nanopores each with a diameter of 10 nm or less, and in which the metal oxides are homogeneously dispersed in a wall constituting the nanopores.

4. The method of producing a nanoporous metal oxide material according to any one of claims 1 to 3, wherein the fluid raw material composition is mixed at a shear rate of 10000 sec⁻¹ or more.
